# EUROPEAN PATENT APPLICATION

(11) **EP 3 780 010 A1**
(43) Date of publication of application: **17.02.2021**
(21) Application number: 19775542.4
(22) Date of filing: 19.03.2019
(51) Int. Cl.: H01B 1/24, C09C 1/00, C09D 5/00, C09D 5/24, C09D 7/61, C09D 17/00, C09D 179/02, H01M 4/66

(54) **CONDUCTIVE CARBON MATERIAL DISPERSION LIQUID**

(30) Priority: 29.03.2018 JP 2018063588
(71) Applicant: Nissan Chemical Corporation, Tokyo 103-6119 (JP)
(72) Inventor: HATANAKA Tatsuya, Funabashi-shi, Chiba 274-0052 (JP); YAJIMA Mari, Funabashi-shi, Chiba 274-0052 (JP); SAKAIDA Yasushi, Funabashi-shi, Chiba 274-0052 (JP)
(74) Representative: Mewburn Ellis LLP
(86) International application number: PCT/JP2019/011318
(87) International publication number: WO 2019/188535

(57) **Abstract**

This conductive carbon material dispersion liquid contains a conductive carbon material, a cationic dispersant, and a solvent, and does not contain an anionic compound, wherein the cationic dispersant is a cationic polymer which does not have an anionic functional group, for example, a dicyandiamide/diethylenetriamine condensate, or a polyethyleneimine. This conductive carbon material dispersion liquid is suitable for the production of an undercoat layer formed on an electrode current collector of an energy storage device such as a lithium ion secondary battery.

## Description

### TECHNICAL FIELD

The present invention relates to a conductive carbon material dispersion.

### BACKGROUND ART

Given the need for smaller sizes, lower weights and higher functionality in portable electronic devices such as smart phones, digital cameras and handheld game consoles, the development of high-performance batteries has been actively pursued in recent years and demand for secondary batteries, which can be repeatedly used by charging, is growing rapidly.

In particular, lithium ion secondary batteries, because of their high energy density and high voltage, and also because they lack a memory effect during charging and discharging, are the secondary batteries being developed most aggressively.

As part of recent efforts to tackle environmental problems, electrical vehicles are also under active development, and higher performance has come to be desired of the secondary batteries that serve as the power source for such vehicles.

Lithium ion secondary batteries have a structure in which a container houses a positive electrode and a negative electrode capable of intercalating and deintercalating lithium and a separator interposed between the electrodes, and is filled with an electrolyte solution (in the case of lithium ion polymer secondary batteries, a gel-like or completely solid electrolyte instead of a liquid electrolyte solution).

The positive electrode and negative electrode are generally produced by coating a composition which includes an active material capable of intercalating and deintercalating lithium, an electrically conductive material consisting primarily of a carbon material, and a polymer binder onto a current collector such as copper foil or aluminum foil. The binder is used to bond the active material with the conductive material, and also to bond these with the metal foil. Commercially available binders of this type include, for example, N-methylpyrrolidone (NMP)-soluble fluoropolymers such as polyvinylidene fluoride (PVdF), and aqueous dispersions of olefin polymers.

However, the bonding strength of the above binders to the current collector is inadequate. During production operations such as electrode plate cutting steps and winding steps, some of the active material and conductive material separates from the current collector and falls off, causing micro-shorting and variability in the battery capacity.

In addition, with long-term use, due to swelling of the binder by the electrolyte solution or to changes in the volume of the electrode mixture layer associated with volume changes resulting from lithium intercalation and deintercalation by the active material, the contact resistance between the electrode mixture layer and the current collector increases or some of the active material and the conductive material separates from the current collector and falls off, leading to a deterioration in the battery capacity and also to problems in terms of safety.

In an effort to solve such problems, methods that involve placing an electrically conductive undercoat layer between the current collector and the electrode mixture layer have been developed as a way to lower the battery resistance by increasing adhesion between the current collector and the electrode mixture layer and lowering the contact resistance.

For example, Patent Document 1 discloses the art of disposing, as an undercoat layer between the current collector and the electrode mixture layer, a conductive layer containing carbon as a conductive filler. This publication indicates that, by using an undercoat layer-containing composite current collector (also referred to below simply as a "composite current collector"), the contact resistance between the current collector and the electrode mixture layer can be lowered, loss of capacity during high-speed discharge can be suppressed, and moreover deterioration of the battery can be minimized. Similar art is disclosed also in Patent Documents 2 and 3.

In addition, Patent Documents 4 and 5 disclose an undercoat layer which contains carbon nanotubes (abbreviated below as "CNTs") as the conductive filler.

Of conductive carbon materials, the CNTs used in Patent Documents 4 and 5 are conductive carbon materials having particularly outstanding conductivity, but because they do not dissolve in solvents, forming an applied film containing CNTs has been difficult. Because of this, examples have been recently reported in which the CNTs are used after being dispersed using a dispersant (Patent Document 6).

Separately, cationic polymers exhibit a high bonding strength due to strong electrostatic interactions with anionic polymers.

Patent Document 7 reports examples in which a cationic polymer was used as a dispersant for carbon nanotubes. However, in the art described in this publication, a diallylamine-based cationic polymer, an anionic surfactant and a nonionic surfactant must be used together.

Also, a dispersant having a cationic amine head is used in Patent Document 8, but this is a zwitterion. A second polymer ingredient is required in order to disperse carbon nanotubes.

In the art of Patent Documents 7 and 8, in addition to the problem that the required amount of electrically insulating ingredient increases, hindering manifestation of the conductivity expected of CNTs, the presence of a cationic ingredient and an anionic ingredient within the composition results in a neutralized state, and so a strong electrostatic interaction with another material that is anionic cannot be expected.

Hence, there has existed a desire for art that can stably disperse a conductive carbon material within a dispersant using only a cationic polymer.

### PRIOR ART DOCUMENTS

### PATENT DOCUMENTS

Patent Document 1: JP-A H09-097625
Patent Document 2: JP-A 2000-011991
Patent Document 3: JP-A H11-149916
Patent Document 4: WO 2014/042080
Patent Document 5: WO 2015/029949
Patent Document 6: JP No. 5773097
Patent Document 7: JP No. 5403738
Patent Document 8: JP No. 5328150

### SUMMARY OF INVENTION

### TECHNICAL PROBLEM

The present invention was arrived at in light of the above circumstances. An object of the invention is to provide a conductive carbon material dispersion which uses only a cationic polymer as the dispersant for the conductive carbon material.

### SOLUTION TO PROBLEM

The inventors have conducted extensive investigations in order to achieve the above object. As a result, they have discovered compositions capable of dispersing a conductive carbon material such as CNTs using a dispersant that contains a cationic polymer having no anionic functional groups. This discovery ultimately led to the present invention.

Accordingly, the invention provides:
1. A conductive carbon material dispersion which includes a conductive carbon material, a cationic dispersant having no anionic functional groups and a solvent, and which contains no anionic compounds;
2. The conductive carbon material dispersion of 1 above, wherein the cationic dispersant includes one or more selected from the group consisting of cationic polymers obtained using dicyandiamide as the monomer, cationic polymers obtained using diethylenetriamine as the monomer, cationic polymers obtained using dicyandiamide and diethylenetriamine as the monomers, and cationic polymers obtained using ethyleneimine as the monomer;
3. The conductive carbon material dispersion of 2 above, wherein the cationic dispersant is a cationic polymer obtained using ethyleneimine as the monomer;
4. The conductive carbon material dispersion of 2 above, wherein the cationic dispersant is a cationic polymer obtained using dicyandiamide as the monomer;
5. The conductive carbon material dispersion of 2 above, wherein the cationic dispersant is a cationic polymer obtained using diethylenetriamine as the monomer;
6. The conductive carbon material dispersion of 2 above, wherein the cationic dispersant is a cationic polymer obtained using dicyandiamide and diethylenetriamine as the monomer;
7. The conductive carbon material dispersion of any of 1 to 6 above, wherein the conductive carbon material includes carbon nanotubes;
8. The conductive carbon material dispersion of any of 1 to 7 above, wherein the solvent includes water;
9. The conductive carbon material dispersion of any of 1 to 8 above which has a solids content of not more than 20 wt%;
10. The conductive carbon material dispersion of 9 above which has a solids content of not more than 10 wt%;
11. The conductive carbon material dispersion of 10 above which has a solids content of not more than 5 wt%;
12. The conductive carbon material dispersion of any of 1 to 11 above for use in forming an undercoat layer;
13. A conductive thin film obtained from the conductive carbon material dispersion of any of 1 to 11 above;
14. The conductive thin film of 13 above which has a coating weight of not more than 5,000 mg/m²;
15. The conductive thin film of 14 above which has a coating weight of not more than 1,000 mg/m²;
16. The conductive thin film of 15 above which has a coating weight of not more than 500 mg/m²;
17. The conductive thin film of 16 above which has a coating weight of not more than 300 mg/m²;
18. A composite current collector for an energy storage device electrode, which includes the conductive thin film of any of 13 to 17 above;
19. An energy storage device electrode which includes the composite current collector for an energy storage device electrode of 18 above;
20. An energy storage device which includes the energy storage device electrode of 19 above; and
21. The energy storage device of 20 above which is a lithium ion secondary battery.

### ADVANTAGEOUS EFFECTS OF INVENTION

By virtue of this invention, conductive carbon materials such as CNTs can be dispersed using only a cationic polymer as the dispersant.

The conductive carbon material dispersion is suitable for producing an undercoat layer that is formed on an electrode current collector for an energy storage device such as a lithium ion secondary battery. By using electrodes having an undercoat layer that has been produced from the dispersion of the invention, low-resistance energy storage devices and a simple and efficient method for their production can be provided.

### BRIEF DESCRIPTION OF DRAWING

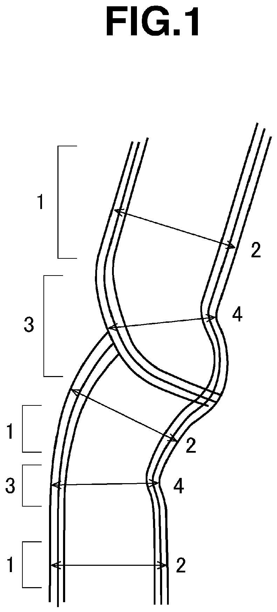

[FIG. 1] FIG. 1 is a schematic cross-sectional diagram of a carbon nanotube having constricted areas, such as may be used in this invention.

### DESCRIPTION OF EMBODIMENTS

The present invention is described more fully below.

The conductive carbon material dispersion according to the invention includes a conductive carbon material, a cationic dispersant that has no functional groups and a solvent, and includes no anionic compounds.

Conductive carbon materials that can be used in the dispersion of the invention may be suitably selected from among known carbon materials such as carbon black, ketjen black, acetylene black, carbon whiskers, carbon nanotubes (CNTs), carbon fibers, natural graphite and synthetic graphite. In this invention, the use in particular of a conductive carbon material containing carbon black and/or CNTs is preferred, and the use of a conductive carbon material consisting solely of carbon black or consisting solely of CNTs is more preferred.

Carbon nanotubes are generally produced by an arc discharge process, chemical vapor deposition (CVD), laser ablation or the like. The CNTs used in this invention may be obtained by any of these methods. CNTs are categorized as single-walled CNTs consisting of a single cylindrically rolled graphene sheet (abbreviated below as "SWCNTs"), double-walled CNTs consisting of two concentrically rolled graphene sheets ("DWCNTs"), and multi-walled CNTs consisting of a plurality of concentrically rolled graphite sheets (MWCNTs). SWCNTs, DWCNTs or MWCNTs may be used alone in the invention, or a plurality of these types of CNTs may be used in combination. From the standpoint of cost, multi-walled CNTs having a diameter of at least 2 nm in particular are preferred; from the standpoint of the ability to form a thinner film, multi-walled CNTs having a diameter of not more than 500 nm in particular are preferred, multi-walled CNTs having a diameter of not more than 100 nm are more preferred, multi-walled CNT's have a diameter of not more than 50 nm are even more preferred, and multi-walled CNT's having a diameter of not more than 30 nm are most preferred. The diameter of the CNTs can be measured by using a transmission electron microscope to examine a thin film obtained by drying a dispersion of the CNTs dispersed in a solvent.

When SWCNTs, DWCNTs or MWCNTs are produced by the above methods, catalyst metals such as nickel, iron, cobalt or yttrium may remain in the product, and so purification to remove these impurities is sometimes necessary. Sonication together with acid treatment with nitric acid, sulfuric acid or the like is effective for removing impurities. However, in acid treatment with nitric acid, sulfuric acid or the like, there is a possibility of the π-conjugated system making up the CNTs being destroyed and the properties inherent to the CNTs being lost. Hence, it is desirable for the CNTs to be purified and used under suitable conditions.

In particular, in order to exhibit a battery resistance-lowering effect when the dispersion is applied as a film and formed into an undercoat layer, it is preferable for the CNTs used in this invention to be CNTs that easily disperse within the dispersion. Such CNTs are preferably ones having numerous crystal discontinuities that readily break under a small energy.

From this standpoint, the CNTs used in the inventive composition are preferably ones having constricted areas. As used herein, a "CNT having constricted areas" refers to a carbon nanotube having constricted areas where the diameter of the tube is 90% or less of the tube diameter across parallel areas of the CNT.

Because such a constricted area is a site created when the CNT direction of growth changes, it has a crystalline discontinuity and is a breakable place that can be easily cut with a small mechanical energy.

FIG. 1 shows a schematic cross-sectional diagram of a CNT having parallel areas 1 and constricted areas 3.

A parallel area 1, as shown in FIG. 1, is a portion where the walls can be recognized as two parallel straight lines or two parallel curved lines. At this parallel area 1, the distance between the outer walls of the tube in the direction normal to the parallel lines is the tube outer diameter 2 for the parallel area 1.

A constricted area 3 is a portion which is continuous at both ends with parallel areas 1 and where the distance between the walls is closer than in the parallel area 1. More specifically, it is an area having a tube outer diameter 4 which is 90% or less of the tube outer diameter 2 at parallel areas 1. The tube outer diameter 4 at the constricted areas 3 is the distance between the outer walls of the tube at the place where the outer walls are closest together. As shown in FIG. 1, places where the crystal is discontinuous exist at most of the constricted areas 3.

The wall shape and tube outer diameter of the CNTs can be observed with a transmission electron microscope or the like. Specifically, the constricted areas can be confirmed from the image obtained by preparing a 0.5% dispersion of the CNTs, placing the dispersion on a microscope stage and drying it, and then photographing the dried dispersion at a magnification of 50,000× with a transmission electron microscope.

When a 0.1% dispersion of the CNTs is prepared, the dispersion is placed on a microscope stage and dried, an image of the dried dispersion captured at 20,000× with a transmission electron microscope is divided into 100 nm square sections and 300 of the sections in which the CNTs occupy from 10 to 80% of the 100 nm square section are selected, the proportion of all such sections which have breakable places (proportion having breakable places present) is determined as the proportion of the 300 sections which have at least one constricted area present within the section. In cases where the surface area occupied by the CNTs in a section is 10% or less, measurement is difficult because the amount of CNTs present is too low. On the other hand, when the surface area occupied by the CNTs in a section is 80% or more, the CNTs end up overlapping, as a result of which it is difficult to distinguish between parallel areas and constricted areas, making precise measurement a challenge.

In the CNTs used in this invention, the proportion having breakable places present is 60% or more. When the proportion having breakable places present is lower than 60%, the CNTs are difficult to disperse; applying excessive mechanical energy to effect dispersion leads to destruction of the crystalline structure of the graphite-net plane, lowering the properties such as electrical conductivity that are characteristic of CNTs. To obtain a higher dispersibility, the proportion having breakable places present is preferably 70% or more.

Specific examples of CNTs that may be used in this invention include the following CNTs having a constricted structure that are disclosed in WO 2016/076393 and JP-A 2017-206413: the TC series such as TC-2010, TC-2020, TC-3210L and TC-1210LN (Toda Kogyo Corporation), CNTs synthesized by the super growth method (available from the New Energy and Industrial Technology Development Organization (NEDO) in the National Research and Development Agency), eDIPS-CNTs (available from NEDO in the National Research and Development Agency), the SWNT series (available under this trade name from Meijo Nano Carbon), the VGCF series (available under this trade name from Showa Denko KK), the FloTube series (available under this trade name from CNano Technology), AMC (available under this trade name from Ube Industries, Ltd.), the NANOCYL NC7000 series (available under this trade name from Nanocyl S.A.), Baytubes (available under this trade name from Bayer), GRAPHISTRENGTH (available under this trade name from Arkema), MWNT7 (available under this trade name from Hodogaya Chemical Co., Ltd.) and Hyperion CNT (available under this trade name from Hyperion Catalysis International).

A cationic dispersant having no anionic functional groups is used as the dispersant in the conductive carbon material dispersion of the invention. In this invention, "having no anionic functional groups" means to have no anionic functional groups on the molecule-i.e., to be unable to assume a zwitterionic structure, and includes the form of salts of a cation on the cationic dispersant with a counteranion (e.g., amine hydrochlorides).

The cationic dispersant is not particularly limited, so long as it has no anionic functional groups. A known cationic polymer having no anionic functional groups may be suitably selected and used, although in terms of a better carbon material dispersibility, it is preferable in particular for the cationic dispersant to include one or more selected from the group consisting of cationic polymers synthesized using dicyandiamide as the monomer, cationic polymers synthesized using diethylenetriamine as the monomer, cationic polymers synthesized using dicyandiamide and diethylenetriamine as the monomers, and cationic polymers synthesized using an ethyleneimine as the monomer. It is more preferable for the cationic dispersant to include one or more selected from the group consisting of cationic polymers synthesized using dicyandiamide and diethylenetriamine as the monomers and cationic polymers synthesized using ethyleneimine as the monomer. It is even more preferable for the cationic dispersant to include one or more selected from dicyandiamide-diethylenetriamine condensates and polyethyleneimines which are cationic polymers synthesized using ethyleneimine as the monomers.

The cationic polymer may be a copolymer which includes also monomer constituents other than the above monomer constituents.

These cationic polymers may be ones which are obtained by a known method of synthesis, although commercial products may also be used.

Illustrative examples of such commercial products include the Unisence series from Senka Corporation; and Epomin (polyethyleneimine) SP-003, SP-006, SP-012, SP-018, SP-020 and P-1000, as well as Polyment (aminoethylated acrylic polymer) NK-100PM, NM-200PM, NK-350 and NK-380, all from Nippon Shokubai Co., Ltd.

In the Unisence series, suitable use can be made of Unisence KHP10P (a hydrochloride of a dicyandiamide-diethylenetriamine condensate).

In the present invention, the mixing ratio of the conductive carbon material such as CNTs and the cationic dispersant is not particularly limited and may be set to, expressed as a weight ratio, from about 1,000:1 to about 1:100.

The concentration of dispersant in the dispersion is not particularly limited, provided that it is a concentration which can disperse the conductive carbon material such as CNTs in the solvent. The concentration in the dispersion is preferably from about 0.001 wt% to about 30 wt%, and more preferably from about 0.002 wt% to about 20 wt%.

The concentration of the conductive carbon material such as CNTs in the dispersion varies according to the coating weight of the target conductive thin film (undercoat layer) and the required mechanical, electrical and thermal characteristics. In cases where CNTs are used, it may be any concentration at which at least a portion of the CNTs individually disperse, although the concentration in the dispersion is preferably set to from about 0.0001 wt% to about 30 wt%, more preferably from about 0.001 wt% to about 20 wt%, and even more preferably from about 0.001 wt% to about 10 wt%.

The solvent is not particularly limited, so long as it is one that has hitherto been used in preparing conductive compositions. Illustrative examples include water and the following organic solvents: ethers such as tetrahydrofuran (THF), diethyl ether and 1,2-dimethoxyethane (DME); halogenated hydrocarbons such as methylene chloride, chloroform and 1,2-dichloroethane; amides such as N,N-dimethylformamide (DMF), N,N-dimethylacetamide (DMAc) and N-methyl-2-pyrrolidone (NMP); ketones such as acetone, methyl ethyl ketone, methyl isobutyl ketone and cyclohexanone; alcohols such as methanol, ethanol, isopropanol, n-butanol, t-butanol and n-propanol; aliphatic hydrocarbons such as n-heptane, n-hexane and cyclohexane; aromatic hydrocarbons such as benzene, toluene, xylene and ethylbenzene; glycol ethers such as ethylene glycol monoethyl ether, ethylene glycol monobutyl ether and propylene glycol monomethyl ether; and glycols such as ethylene glycol and propylene glycol. One of these solvents may be used alone, or two or more may be used in admixture.

In particular, to be able to increase the proportion of CNTs that are individually dispersed, water, NMP, DMF, THF, methanol, ethanol, n-propanol, isopropanol, n-butanol and t-butanol are preferred. To be able to improve the coatability, it is preferable to include methanol, ethanol, n-propanol, isopropanol, n-butanol or t-butanol. To be able to lower costs, it is preferable to include water. For the purpose of increasing the proportion of CNTs that are individually dispersed, raising the coatability and lowering the costs, these solvents may be used alone or two or more may be used in admixture. When a mixed solvent of water and an alcohol is used, the mixing ratio is not particularly limited, although it is preferable for the weight ratio (water:alcohol) to be from about 1:1 to about 10:1.

A polymer without anionic functional groups that can serve as a matrix may be added to the conductive carbon material dispersion of the invention. Illustrative examples of matrix polymers include the following thermoplastic resins: fluoropolymers such as polyvinylidene fluoride (PVdF), polytetrafluoroethylene, tetrafluoroethylene-hexafluoropropylene copolymers, vinylidene fluoride-hexafluoropropylene copolymers (P(VDF-HFP)) and vinylidene fluoride-chlorotrifluoroethylene copolymers (P(VDF-CTFE)); polyolefin resins such as polyvinylpyrrolidone, ethylene-propylene-diene ternary copolymers, polyethylene (PE), polypropylene (PP), ethylene-vinyl acetate copolymers (EVA) and ethylene-ethyl acrylate copolymers (EEA); polystyrene resins such as polystyrene (PS), high-impact polystyrene (HIPS), acrylonitrile-styrene copolymers (AS), acrylonitrile-butadiene-styrene copolymers (ABS), methyl methacrylate-styrene copolymers (MS) and styrene-butadiene rubbers; polycarbonate resins, vinyl chloride resins, polyamide resins, polyimide resins, (meth)acrylic resins such as polymethyl methacrylate (PMMA), polyester resins such as polyethylene terephthalate (PET), polybutylene terephthalate, polyethylene naphthalate, polybutylene naphthalate, polylactic acid (PLA), poly-3-hydroxybutyric acid, polycaprolactone, polybutylene succinate and polyethylene succinate/adipate; polyphenylene ether resins, modified polyphenylene ether resins, polyacetal resins, polysulfone resins, polyphenylene sulfide resins, polyvinyl alcohol resins, polyglycolic acids, modified starches, cellulose acetate, carboxymethylcellulose, cellulose triacetate; chitin, chitosan and lignin; the following electrically conductive polymers: polyaniline and emeraldine base (the semi-oxidized form of polyaniline), polythiophene, polypyrrole, polyphenylene vinylene, polyphenylene and polyacetylene; and the following thermoset or photocurable resins: epoxy resins, urethane acrylate, phenolic resins, melamine resins, urea resins and alkyd resins. Because it is desirable to use water as the solvent in the conductive carbon material dispersion of the invention, the matrix polymer is preferably a water-soluble polymer such as water-soluble cellulose ether, polyvinyl alcohol or polyethylene glycol.

The matrix polymer may be acquired as a commercial product. Illustrative examples of such commercial products include the Metolose SH Series (hydroxypropylmethyl cellulose, from Shin-Etsu Chemical Co., Ltd.), the Metolose SE Series (hydroxyethylmethyl cellulose, from Shin-Etsu Chemical Co., Ltd.), JC-25 (a fully saponified polyvinyl alcohol, from Japan Vam & Poval Co., Ltd.), JM-17 (an intermediately saponified polyvinyl alcohol, from Japan Vam & Poval Co., Ltd.) and JP-03 (a partially saponified polyvinyl alcohol, from Japan Vam & Poval Co., Ltd.).

The matrix polymer content, although not particularly limited, is preferably set to from about 0.0001 to about 99 wt%, and more preferably from about 0.001 to about 90 wt%, of the dispersion.

The conductive carbon material dispersion of the invention may include a crosslinking agent having no anionic functional groups. The crosslinking agent preferably dissolves in the solvent that is used.

The crosslinking agent is exemplified by any of the following which are capable of reacting with amino groups: ketones, alkyl halides, acryloyls, epoxy compounds, cyanamides, ureas, acids, acid anhydrides, acyl halides, and compounds having a functional group such as a thioisocyanate group, isocyanate group or aldehyde group; and by compounds having like crosslinkable functional groups which react with one another, such as hydroxyl groups (dehydration condensation), mercato groups (disulfide bonding), ester groups (Claisen condensation), silanol groups (dehydration condensation), vinyl groups and acrylic groups.

Specific examples of crosslinking agents include any of the following which exhibit crosslink reactivity in the presence of an acid catalyst: polyfunctional acrylates, tetraalkoxysilanes, and monomers or polymer having a blocked isocyanate group.

Such crosslinking agents may be acquired as commercial products. Examples of commercial products include polyfunctional acrylates such as A-9300 (ethoxylated isocyanuric acid triacrylate, from Shin-Nakamura Chemical Co., Ltd.), A-GLY-9E (ethoxylated glycerine triacrylate (EO 9 mol), from Shin-Nakamura Chemical Co., Ltd.) and A-TMMT (pentaerythritol tetraacrylate, from Shin-Nakamura Chemical Co., Ltd.); tetraalkoxysilanes such as tetramethoxysilane (Tokyo Chemical Industry Co., Ltd.) and tetraethoxysilane (Toyoko Kagaku Co., Ltd.); and blocked isocyanate group-containing polymers such as the Elastron Series E-37, H-3, H38, BAP, NEW BAP-15, C-52, F-29, W-11P, MF-9 and MF-25K (DKS Co., Ltd.).

The amount in which these crosslinking agents is added varies according to, for example, the solvent used, the substrate used, the viscosity required and the film shape required, but is generally from 0.001 to 80 wt%, preferably from 0.01 to 50 wt%, and more preferably from 0.05 to 40 wt%, based on the cationic dispersant.

As mentioned above, the conductive carbon material dispersion of the invention does not include anionic compounds having anionic functional groups. Therefore, even in cases where a matrix polymer or a crosslinking agent is used, compounds having anionic functional groups are not used.

The method of preparing the conductive carbon material dispersion of the invention is not particularly limited, and may involve mixing together in any order the conductive carbon material, the cationic dispersant and the solvent, and also the matrix polymer, crosslinking agent and the like which may be used where necessary, so as to prepare the dispersion.

The mixture is preferably dispersion treated at this time. Such treatment enables the proportion of the conductive carbon material such as CNTs that is dispersed to be further increased. Examples of dispersion treatment include mechanical treatment in the form of wet treatment using, for example, a ball mill, bead mill or jet mill, or in the form of sonication using a bath-type or probe-type sonicator. Wet treatment using a jet mill and sonication are especially preferred.

The dispersion treatment may be carried out for any length of time, although a period of from about 1 minute to about 10 hours is preferred, and a period of from about 5 minutes to about 5 hours is even more preferred. If necessary, heat treatment may be carried out at this time.

When optional ingredients such as a matrix polymer are used, these may be added after preparing the mixture of the cationic dispersant, conductive carbon material and solvent.

The solids concentration of the conductive carbon material dispersion in this invention is not particularly limited. However, taking into account such applications as that of forming an undercoat layer, the concentration is preferably not more than 20 wt%, more preferably not more than 10 wt%, and even more preferably not more than 5 wt%.

The lower limit may be any value. However, from a practical standpoint, the lower limit is preferably at least 0.1 wt%, more preferably at least 0.5 wt%, and even more preferably at least 1 wt%.

Here, "solids" refers to the total amount of ingredients other than the solvent which make up the conductive carbon material dispersion.

A conductive thin film can be formed by applying the above-described conductive carbon material dispersion onto a substrate and then drying the applied dispersion in air or under heating. In this case, by using an energy storage device current collector as the substrate, the conductive thin film that has been formed can be made to function as an undercoat layer.

The coating weight of the conductive thin film is not particularly limited. However, taking into consideration, for example, the decrease in internal resistance of the device when the conductive thin film is used as an undercoat layer, the coating weight is preferably 5,000 mg/m² or less, more preferably 1,000 mg/m² or less, even more preferably 500 mg/m² or less, and still more preferably 300 mg/m² or less.

The coating weight has no particular lower limit. However, to ensure that the undercoat layer functions and to reproducibly obtain batteries having excellent characteristics, the coating weight of the undercoat layer is preferably at least 1 mg/m², more preferably at least 5 mg/m², even more preferably at least 10 mg/m², and still more preferably at least 15 mg/m².

The coating weight of the conductive thin film is the ratio of the conductive thin film weight (mg) to the conductive thin film surface area (m²). In cases where the conductive thin film is formed into a pattern, this surface area is the surface area of only the conductive thin film and does not include the surface area of exposed substrate between the conductive thin film that has been formed into a pattern.

The weight of the conductive thin film can be determined by, for example, cutting out a test specimen of a suitable size from the substrate on which the conductive thin film has been formed and measuring its weight W0, subsequently measuring the weight W1 after the thin film has been stripped from the test piece, and calculating the difference therebetween (W0 - W1). Alternatively, the weight of the thin film can be determined by first measuring the weight W2 of the substrate, subsequently measuring the weight W3 of the substrate on which the conductive thin film has been formed, and calculating the difference therebetween (W3 - W2).

The method used to strip off the conductive thin film may involve, for example, immersing the conductive thin film in a solvent which dissolves the conductive thin film or causes it to swell, and then wiping off the conductive thin film with a cloth or the like.

The conductive thin film has a thickness which, taking into account such considerations as reducing the internal resistance of the resulting device, is preferably from 1 nm to 10 µm, more preferably from 1 nm to 1 µm, and even more preferably from 1 to 500 nm.

The thickness of the conductive thin film can be determined by, for example, cutting out a test specimen of a suitable size from a substrate on which the conductive film has been formed, exposing the cross-section by such means as tearing the specimen by hand, and using a scanning electron microscope (SEM) or the like to microscopically examine the cross-sectional region where the conductive thin layer lies exposed.

The coating weight and film thickness can be adjusted by a known method. For example, in cases where the conductive thin film is formed by coating, these properties can be adjusted by varying the solids concentration of the conductive carbon material dispersion, the number of coating passes or the clearance of the coating liquid delivery opening in the coater.

When one wishes to increase the coating weight or film thickness, this is done by making the solids concentration higher, increasing the number of coating passes or making the clearance larger. When one wishes to lower the coating weight or film thickness, this is done by making the solids concentration lower, reducing the number of coating passes or making the clearance smaller.

The current collector may be one that has hitherto been used in energy storage device electrodes. For example, use can be made of copper, aluminum, titanium, stainless steel, nickel, gold, silver and alloys thereof, and of carbon materials, metal oxides and conductive polymers. In cases where the electrode assembly is fabricated by the application of welding such as ultrasonic welding, the use of metal foil made of copper, aluminum, titanium, stainless steel or an alloy thereof is preferred.

The thickness of the current collector is not particularly limited, although a thickness of from 1 to 100 µm is preferred in this invention.

Coating methods for the conductive carbon material dispersion include spin coating, dip coating, flow coating, inkjet coating, casting, spray coating, bar coating, gravure coating, slit coating, roll coating, flexographic printing, transfer printing, brush coating, blade coating, air knife coating and die coating. From the standpoint of work efficiency and other considerations, inkjet coating, casting, dip coating, bar coating, blade coating, roll coating, gravure coating, flexographic printing, spray coating and die coating are preferred.

The temperature during drying under applied heat, although not particularly limited, is preferably from about 50°C to about 200°C, and more preferably from about 80°C to about 150°C.

The energy storage device electrode of the invention can be produced by forming an electrode mixture layer on the conductive thin film (undercoat layer).

The energy storage device in this invention is exemplified by various types of energy storage devices, including electrical double-layer capacitors, lithium secondary batteries, lithium-ion secondary batteries, proton polymer batteries, nickel-hydrogen batteries, aluminum solid capacitors, electrolytic capacitors and lead storage batteries. The undercoat foil of the invention is particularly well-suited for use in electrical double-layer capacitors and lithium-ion secondary batteries.

The active material used here may be any of the various types of active materials that have hitherto been used in energy storage device electrodes.

For example, in the case of lithium secondary batteries and lithium-ion secondary batteries, chalcogen compounds capable of intercalating and deintercalating lithium ions, lithium ion-containing chalcogen compounds, polyanion compounds, elemental sulfur and sulfur compounds may be used as the positive electrode active material.

Illustrative examples of such chalcogen compounds capable of intercalating and deintercalating lithium ions include FeS₂, TiS₂, MoS₂, V₂O₆, V₆O₁₃ and MnO₂.

Illustrative examples of lithium ion-containing chalcogen compounds include LiCoO₂, LiMnO₂, LiMn₂O₄, LiMo₂O₄, LiV₃O₈, LiNiO₂ and LiₓNi_{y}M_{1-y}O₂ (wherein M is one or more metal element selected from cobalt, manganese, titanium, chromium, vanadium, aluminum, tin, lead and zinc; and the conditions 0.05 ≤ x ≤ 1.10 and 0.5 ≤ y ≤ 1.0 are satisfied).

An example of a polyanion compound is LiFePO₄.

Illustrative examples of sulfur compounds include Li₂S and rubeanic acid.

The following may be used as the active material in the negative electrode: alkali metals, alkali alloys, at least one elemental substance selected from among group 4 to 15 elements of the periodic table which intercalate and deintercalate lithium ions, as well as oxides, sulfides and nitrides thereof, and carbon materials which are capable of reversibly intercalating and deintercalating lithium ions.

Illustrative examples of the alkali metals include lithium, sodium and potassium. Illustrative examples of the alkali metal alloys include Li-Al, Li-Mg, Li-Al-Ni, Na-Hg and Na-Zn.

Illustrative examples of the at least one elemental substance selected from among group 4 to 15 elements of the periodic table which intercalate and deintercalate lithium ions include silicon, tin, aluminum, zinc and arsenic.

Illustrative examples of the oxides include tin silicon oxide (SnSiO₃), lithium bismuth oxide (Li₃BiO₄), lithium zinc oxide (Li₂ZnO₂), lithium titanium oxide (Li₄Ti₅O₁₂) and titanium oxide.

Illustrative examples of the sulfides include lithium iron sulfides (LiₓFeS₂ (0 ≤ x ≤ 3)) and lithium copper sulfides (LiₓCuS (O ≤ x ≤ 3)).

Exemplary nitrides include lithium-containing transition metal nitrides, illustrative examples of which include LiₓM_{y}N (wherein M is cobalt, nickel or copper; 0 ≤ x ≤ 3, and 0 ≤ y ≤ 0.5) and lithium iron nitride (Li₃FeN₄).

Examples of carbon materials which are capable of reversibly intercalating and deintercalating lithium ions include graphite, carbon black, coke, glassy carbon, carbon fibers, carbon nanotubes, and sintered compacts of these.

In the case of electrical double-layer capacitors, a carbonaceous material may be used as the active material.

The carbonaceous material is exemplified by activated carbon, such as activated carbon obtained by carbonizing a phenolic resin and then subjecting the carbonized resin to activation treatment.

The electrode mixture layer may be formed by applying onto the undercoat layer an electrode slurry prepared by combining the above-described active material, the subsequently described binder polymer and, optionally, a solvent, and then drying the applied slurry in air or under heating.

A known material may be suitably selected and used as the binder polymer. Illustrative examples include electrically conductive polymers such as polyvinylidene fluoride (PVdF), polyvinylpyrrolidone, polytetrafluoroethylene, tetrafluoroethylene-hexafluoropropylene copolymers, vinylidene fluoride-hexafluoropropylene copolymers (P(VDF-HFP)), vinylidene fluoride-chlorotrifluoroethylene copolymers (P(VDF-CTFE)), polyvinyl alcohols, polyimides, ethylene-propylene-diene ternary copolymers, styrene-butadiene rubbers, carboxymethylcellulose (CMC), polyacrylic acid (PAA) and polyaniline.

The amount of binder polymer added per 100 parts by weight of the active material is preferably from 0.1 to 20 parts by weight, and more preferably from 1 to 10 parts by weight.

The solvent is exemplified by the solvents mentioned above for the dispersion. The solvent may be suitably selected from among these according to the type of binder, although NMP is preferred in the case of water-insoluble binders such as PVdF, and water is preferred in the case of water-soluble binders such as PAA.

The electrode slurry may also contain a conductive material. Illustrative examples of conductive materials include carbon black, ketjen black, acetylene black, carbon whiskers, carbon fibers, natural graphite, synthetic graphite, titanium oxide, ruthenium oxide, aluminum and nickel.

The method of applying the electrode slurry is exemplified by the same techniques as mentioned above for the dispersion.

The temperature when drying under applied heat, although not particularly limited, is preferably from about 50°C to about 400°C, and more preferably from about 80°C to about 150°C.

If necessary, the electrode may be pressed. Any commonly used method may be employed for pressing, although mold pressing or roll pressing is especially preferred. The pressing force in roll pressing, although not particularly limited, is preferably from 0.2 to 3 metric ton/cm.

The energy storage device according to the invention includes the above-described energy storage device electrode. More specifically, it is constructed of at least a pair of positive and negative electrodes, a separator placed between these electrodes, and an electrolyte, with at least the positive electrode or the negative electrode being the above-described energy storage device electrode.

This energy storage device is characterized by the use, as an electrode therein, of the above-described energy storage device electrode, and so the separator, electrolyte and other constituent members of the device that are used may be suitably selected from known materials.

Illustrative examples of the separator include cellulose-based separators and polyolefin-based separators.

The electrolyte may be either a liquid or a solid, and moreover may be either aqueous or non-aqueous, the energy storage device electrode of the invention being capable of exhibiting a performance sufficient for practical purposes even when employed in devices that use a non-aqueous electrolyte.

The non-aqueous electrolyte is exemplified by a non-aqueous electrolyte solution obtained by dissolving an electrolyte salt in a non-aqueous organic solvent.

Examples of the electrolyte salt include lithium salts such as lithium tetrafluoroborate, lithium hexafluorophosphate, lithium perchlorate and lithium trifluoromethanesulfonate; quaternary ammonium salts such as tetramethylammonium hexafluorophosphate, tetraethylammonium hexafluorophosphate, tetrapropylammonium hexafluorophosphate, methyltriethylammonium hexafluorophosphate, tetraethylammonium tetrafluoroborate and tetraethylammonium perchlorate; and lithium imides such as lithium bis(trifluoromethanesulfonyl)imide and lithium bis(fluorosulfonyl)imide.

Examples of non-aqueous organic solvents include alkylene carbonates such as propylene carbonate, ethylene carbonate and butylene carbonate; dialkyl carbonates such as dimethyl carbonate, methyl ethyl carbonate and diethyl carbonate; nitriles such as acetonitrile, and amides such as dimethylformamide.

The configuration of the energy storage device is not particularly limited. Cells of various known configurations, such as cylindrical cells, flat wound prismatic cells, stacked prismatic cells, coin cells, flat wound laminate cells and stacked laminate cells may be used.

When used in a coil cell, the above-described energy storage device electrode of the invention may be die-cut in a specific disk shape and used.

For example, a lithium-ion secondary battery may be produced by setting one electrode on a coin cell cap to which a washer and a spacer have been welded, laying an electrolyte solution-impregnated separator of the same shape on top thereof, stacking the energy storage device electrode of the invention on top of the separator with the electrode mixture layer facing down, placing the coin cell case and a gasket thereon and sealing the cell with a coin cell crimper.

In a stacked laminate cell, use may be made of an electrode assembly obtained by welding a metal tab at, in an electrode where an electrode mixture layer has been formed on part or all of the undercoat layer surface, a region of the electrode where the electrode mixture layer is not formed (welding region). In cases where welding is carried out at a region where an undercoat layer is formed and an electrode mixture layer is not formed, the coating weight of the undercoat layer per side of the current collector is set to preferably not more than 0.1 g/m², more preferably not more than 0.09 g/m², and even more preferably not more than 0.05 g/m².

The electrodes making up the electrode assembly may be single plates or a plurality of plates, although a plurality of plates are generally used in both the positive and the negative electrodes.

The plurality of electrode plates used to form the positive electrode are preferably stacked in alternation one plate at a time with the plurality of electrode plates that are used to form the negative electrode. It is preferable at this time to place the above-described separator between the positive electrode and the negative electrode.

A metal tab may be welded at a welding region on the outermost electrode of the plurality of electrodes, or a metal tab may be sandwiched and welded between the welding regions on any two adjoining electrode plates.

The metal tab material is not particularly limited, provided it is one that is commonly used in energy storage devices. Examples include metals such as nickel, aluminum, titanium and copper; and alloys such as stainless steel, nickel alloys, aluminum alloys, titanium alloys and copper alloys. From the standpoint of welding efficiency, it is preferable for the tab material to include at least one metal selected from aluminum, copper and nickel.

The metal tab has a shape that is preferably in the form of foil, with the thickness being preferably from about 0.05 mm to about 1 mm.

Known methods for welding together metals may be used as the welding method. Examples include TIG welding, spot welding, laser welding and ultrasonic welding. It is preferable to join together the electrode and the metal tab by ultrasonic welding.

Ultrasonic welding methods are exemplified by a technique in which a plurality of electrodes are placed between an anvil and a horn, the metal tab is placed at the welding regions, and welding is carried out collectively by the application of ultrasonic energy; and a technique in which the electrodes are first welded together, following which the metal tab is welded.

In this invention, with either of these techniques, not only are the metal tab and the electrodes welded together at the welding regions, the plurality of electrodes are ultrasonically welded to one another.

The pressure, frequency, output power, treatment time, etc. during welding are not particularly limited, and may be suitably set while taking into account, for example, the material used, the presence or absence of an undercoat layer, and the coating weight of the undercoat layer.

A laminate cell can be obtained by placing the electrode assembly produced as described above within a laminate pack, injecting the electrolyte solution described above, and subsequently heat sealing.

### EXAMPLES

Examples and Comparative Examples are given below to more fully illustrate the invention, although the invention is not limited by these Examples.

### [1] Preparation of Conductive Carbon Material Dispersion

### [Example 1-1]

The cationic polymer Unisence KHP10P (from Senka Corporation; solids concentration, 99 wt%; monomer composition: dicyandiamide/diethylenetriamine) in an amount of 0.5 g was mixed together with 49 g of pure water, following which 0.5 g of a conductive carbon material (NC7000, carbon nanotubes available from Nanocycl S.A.) was mixed therein. The resulting mixture was sonicated for 10 minutes at 500 W using a probe-type ultrasonicator (UIP1000 from Hielscher Ultrasonics GmbH), thereby giving a uniform carbon nanotube dispersion.

### [Example 1-2]

Aside from changing the conductive carbon material to TC-2010 (carbon nanotubes available from Toda Kogyo Corporation), a dispersion was prepared in the same way as in Example 1-1, thereby giving a uniform carbon nanotube dispersion.

### [Example 1-3]

Aside from changing the conductive carbon material to Denka Black (a carbon black available from Denka Co., Ltd.), a dispersion was prepared in the same way as in Example 1-1, thereby giving a uniform carbon nanotube dispersion.

### [Example 1-4]

Aside from changing the cationic dispersant to 1.67 g of Epomin P-1000 (from Nippon Shokubai Co., Ltd.; solids concentration, 30 wt%; monomer composition: ethyleneimine) and changing to 47.83 g of pure water, a dispersion was prepared in the same way as in Example 1-2, thereby giving a uniform carbon nanotube dispersion.

### [Example 1-5]

Aside from changing the cationic dispersant to 1.67 g of Epomin P-1000 (from Nippon Shokubai Co., Ltd.; solids concentration, 30 wt%; monomer composition: ethyleneimine) and changing to 47.83 g of pure water, a dispersion was prepared in the same way as in Example 1-3, thereby giving a uniform carbon nanotube dispersion.

### [Comparative Example 1-1]

Aside from changing the dispersant to 0.5 g of a polyvinyl alcohol (JF-17 from Toagosei Co., Ltd.; solids concentration, 100 wt%), which is a neutral polymer, a dispersion was prepared in the same way as in Example 1-1, but the dispersion was non-uniform and agglomerates remained.

### [Comparative Example 1-2]

Aside from changing the dispersant to 2.63 g of Aron A-7195 (from Toagosei Co., Ltd.; solids concentration, 19 wt%), an aqueous solution containing sodium polyacrylate (PAA-Na), which is an anionic polymer, and changing the pure water to 46.87 g, a dispersion was prepared in the same way as in Example 1-1, but the dispersion was non-uniform and agglomerates remained.

### [Comparative Example 1-3]

Aside from changing the dispersant to 1.58 g of Aron A-30 (from Toagosei Co., Ltd.; solids concentration, 31.6 wt%), an aqueous solution containing ammonium polyacrylate (PAA-NH₄), which is an anionic polymer, and changing the pure water to 47.92 g, a dispersion was prepared in the same way as in Example 1-1, but the dispersion was non-uniform and agglomerates remained.

It is apparent from the above that, in Examples 1-1 to 1-5 in which a cationic dispersant of the invention was used, it was possible to prepare uniform conductive carbon material dispersions. By contrast, in Comparative Examples 1-1 to 1-3 in which a cationic dispersant was not used, agglomerates remained and uniform conductive carbon material dispersions could not be prepared.

### REFERENCE SIGNS LIST

- 1: Parallel area
- 2: Tube outer diameter at parallel area
- 3: Constricted area
- 4: Tube outer diameter at constricted area

## Claims

1. A conductive carbon material dispersion comprising a conductive carbon material, a cationic dispersant having no anionic functional groups and a solvent, which dispersion contains no anionic compounds.

2. The conductive carbon material dispersion of claim 1, wherein the cationic dispersant includes one or more selected from the group consisting of cationic polymers obtained using dicyandiamide as the monomer, cationic polymers obtained using diethylenetriamine as the monomer, cationic polymers obtained using dicyandiamide and diethylenetriamine as the monomers, and cationic polymers obtained using ethyleneimine as the monomer.

3. The conductive carbon material dispersion of claim 2, wherein the cationic dispersant is a cationic polymer obtained using ethyleneimine as the monomer.

4. The conductive carbon material dispersion of claim 2, wherein the cationic dispersant is a cationic polymer obtained using dicyandiamide as the monomer.

5. The conductive carbon material dispersion of claim 2, wherein the cationic dispersant is a cationic polymer obtained using diethylenetriamine as the monomer.

6. The conductive carbon material dispersion of claim 2, wherein the cationic dispersant is a cationic polymer obtained using dicyandiamide and diethylenetriamine as the monomer.

7. The conductive carbon material dispersion of any one of claims 1 to 6, wherein the conductive carbon material includes carbon nanotubes.

8. The conductive carbon material dispersion of any one of claims 1 to 7, wherein the solvent includes water.

9. The conductive carbon material dispersion of any one of claims 1 to 8 which has a solids content of not more than 20 wt%.

10. The conductive carbon material dispersion of claim 9 which has a solids content of not more than 10 wt%.

11. The conductive carbon material dispersion of claim 10 which has a solids content of not more than 5 wt%.

12. The conductive carbon material dispersion of any one of claims 1 to 11 for use in forming an undercoat layer.

13. A conductive thin film obtained from the conductive carbon material dispersion of any one of claims 1 to 11.

14. The conductive thin film of claim 13 which has a coating weight of not more than 5,000 mg/m².

15. The conductive thin film of claim 14 which has a coating weight of not more than 1,000 mg/m².

16. The conductive thin film of claim 15 which has a coating weight of not more than 500 mg/m².

17. The conductive thin film of claim 16 which has a coating weight of not more than 300 mg/m².

18. A composite current collector for an energy storage device electrode, comprising the conductive thin film of any one of claims 13 to 17.

19. An energy storage device electrode comprising the composite current collector for an energy storage device electrode of claim 18.

20. An energy storage device comprising the energy storage device electrode of claim 19.

21. The energy storage device of claim 20 which is a lithium ion secondary battery.
